# EUROPÄISCHE PATENTANMELDUNG

(11) **EP 2 695 559 A1**
(43) Veröffentlichungstag der Anmeldung: **12.02.2014**
(21) Anmeldenummer: 13178695.6
(22) Anmeldetag: 31.07.2013
(51) Int. Cl.: A47J 31/60, A47J 31/44

(54) **Kaffeevollautomat**

(30) Priorität: 08.08.2012 DE 102012214104
(71) Anmelder: BSH Bosch und Siemens Hausgeräte GmbH, 81739 München (DE)
(72) Erfinder: Knauer, Joachim, 80807 München (DE); Strobl, Robert, 83246 Unterwössen (DE); Tracy, Timothy Mark, 83352 Altenmarkt (DE)

(57) **Zusammenfassung**

Die vorliegende Erfindung betrifft einen Kaffeevollautomaten (1) mit einer Milchschaumdüse (2) zur Erzeugung von erhitzter Milch und/oder Milchschaum, der Leitungen für Milch (10), Dampf und/oder Heißwasser (11) sowie Luft (12) umfasst, wobei die Luftleitung (12) über ein Sperrventil (22) steuerbar ist und die Spülleitung (13) stromauf der Milchschaumdüse (2) in die Milchleitung (10) mündet. Wesentlich ist dabei, dass die Luftleitung (12) an einer ersten Mündung (20) in die Milchleitung (10) mündet.

## Beschreibung

Die Erfindung betrifft einen Kaffeevollautomaten mit einer Milchschaumdüse zur Erzeugung von erhitzter Milch und/oder Milchschaum, mit Leitungen für Milch, Dampf, Heißwasser sowie Luft, wobei die Luftleitung über ein Sperrventil steuerbar ist, und mit einer Spülleitung, die stromauf der Milchschaumdüse in die Milchleitung mündet.

Ein gattungsgemäßes Gerät ist in der EP 2 277 419 A1 offenbart. Es zeigt einen Milchschäumer zur Erzeugung von erhitzter Milch oder Milchschaum, der mit einer Milchleitung und einer Dampfleitung verbunden ist. An einer Koppelstelle mündet eine Spülleitung in die Milchleitung, welche für die Zuführung von Milch aus einem Milchvorratsbehälter in den Milchschäumer sorgt. Mittels der Spülleitung kann die Milchleitung stromab der Koppelstelle gereinigt werden. Der Milchvorratsbehälter und ein bis zur Koppelstelle reichender Abschnitt der Milchleitung können nach einer Abkoppelung vom Getränkeautomaten separat, z.B. in einer Spülmaschine, gereinigt werden. Daraus ergibt sich der Nachteil, dass nicht alle Milch führenden Teile des Leitungssystems automatisch gereinigt werden können. Dieser Umstand ist von Belang, da Milchrückstände in Leitungssystemen bereits bei Zimmertemperatur nach kurzer Zeit zur Gerinnung und zur Bildung von Milchsäure und Casein führen und damit unerwünschte feste Rückstände in der aufbereiteten Milch sowie eine unerwünschte Beeinflussung des Geschmacks des Produkts bewirken. Bei einem Gerät nach EP 2 277 419 A1 ist der Benutzer zu einer regelmäßigen Abkoppelung und Reinigung zumindest eines Teils der Milchleitung gezwungen, um einen hygienischen Betrieb des Geräts zu gewährleisten. Dieser Vorgang ist jedoch zeitaufwendig und unkomfortabel.

Der Erfindung liegt somit die Aufgabe zugrunde, einen Kaffeevollautomaten hinsichtlich einer automatischen und schnellen Reinigung aller Milch führenden Teile des Systems zu verbessern.

Die Aufgabe wird durch einen Kaffeevollautomaten gemäß Oberbegriff mit den in Anspruch 1 angegebenen Merkmalen gelöst. Der eingangs genannte Kaffeevollautomat wird dazu erfindungsgemäß dadurch weitergebildet, dass die Luftleitung in die Milchleitung mündet. Die Erfindung wendet sich also davon ab, die Luftzufuhr unmittelbar in eine oder kurz vor einer Mischkammer im Bereich der Milchschaumdüse münden zu lassen. Sie verfolgt vielmehr das Prinzip, die Luftleitung an einer ersten Mündung stromauf der Milchschaumdüse in die Milchleitung einmünden zu lassen, so dass stromab der ersten Mündung die Milchleitung und die Luftleitung zusammenfallen. Dadurch treffen die Luft und die Milch bereits an der ersten Mündung aufeinander und nicht erst in der Milchschaumdüse.

Die erste Mündung kann prinzipiell an einer beliebigen Stelle der Milchleitung liegen. Die Luftleitung kann stromab der ersten Mündung von der Milchleitung abzweigen, vorzugsweise sind jedoch die Luft- und die Milchleitung in einem Abschnitt zwischen der Milchschaumdüse und der ersten Mündung identisch. Der Anschluss der Luftleitung an die Milchleitung führt daher dazu, dass im Betrieb der Milchschaumdüse und bei Öffnung eines Lufteingangs die Luft und die Milch in einem Leitungsabschnitt stromab der ersten Mündung gemeinsam zur Milchschaumdüse transportiert werden.

Die Spülleitung mündet in die Milchleitung, damit jene nach Gebrauch durch eine Zufuhr von Spülflüssigkeit gereinigt werden kann. Sie kann mit der Dampfleitung verbunden sein. Da die Dampfleitung an einer Heizung als einer Einrichtung zur Erzeugung von Dampf und/oder Heißwasser angeschlossen ist, kann die Spülleitung sowohl mit Dampf als auch mit Heißwasser beaufschlagt werden. Dampf und Heißwasser können somit als Spülfluid zur Reinigung der Milchleitung dienen, so dass eine automatische Reinigung des Kaffeevollautomaten mit Dampf und/oder Heißwasser durchgeführt werden kann. Nach einer vorteilhaften Ausgestaltung der Erfindung muss die Spülleitung nicht direkt in die Milchleitung, sondern kann indirekt, nämlich in die Luftleitung und über sie in die Milchleitung münden. Sie kann an einer zweiten Mündung an die Luftleitung angeschlossen sein, die stromauf der ersten Mündung in der Luftleitung liegt. Damit gelangt das Spülfluid ebenfalls in die Milchleitung, jedoch erst, nachdem es einen gewissen Abschnitt der Luftleitung durchströmt hat. Das Spülfluid reinigt damit jedenfalls einen letzten Abschnitt der Luftleitung zwischen den zweiten und der ersten Mündung, bevor diese in die Milchleitung mündet.

Nach einer weiteren vorteilhaften Ausgestaltung kann der Kaffeevollautomat ein Sperrventil umfassen. Es kann für die Steuerung der Luftzufuhr ansteuerbar sein und jedenfalls zwischen einem geschlossenen und einem geöffneten Zustand umschaltbar sein und kann zugleich ein unerwünschtes Eindringen von Milch in die Luftleitung verhindern. Das Sperrventil kann grundsätzlich an einer beliebigen Stelle in der Luftleitung angeordnet sein. Vorzugsweise ist es direkt an der Mündung der Luftleitung in die Milchleitung positioniert, wodurch der Milchfluss nicht in den nicht versperrten Abschnitt der Luftleitung stromab des Sperrventils abgelenkt wird. Dadurch werden Verwirbelungen minimiert und das Risiko von Milchablagerungen reduziert.

Nach einer weiteren vorteilhaften Ausgestaltung kann das Sperrventil in dem Abschnitt der Luftleitung zwischen den zweiten und der ersten Mündung angeordnet sein, so dass das Spülfluid auch jenes erfasst und durch regelmäßige Reinigung des Sperrventils für dessen zuverlässige Funktion sorgt. Das Sperrventil ist damit gegen verschmutzungsbedingte Ausfälle durch den Kontakt mit der Milch geschützt. Vorzugsweise befindet sich die zweite Mündung in einem definierten Abstand stromauf des Sperrventils. Dieser Abstand ist danach bemessen, wie weit bei einer Undichtigkeit des Sperrventils und einem dadurch verursachten Eindringen von Milch in die Luftleitung, wie sie etwa durch Druckschwankungen hervorgerufen werden kann, die Milch maximal in die Luftleitung vordringt. Der Abstand ist demgemäß jeweils größer zu wählen als die Distanz eines maximalen Vordringens der Milch in die Luftleitung. Daraus ergibt sich der Vorteil, dass ein durch die Spülleitung vorgenommener automatischer Spülvorgang mittels Dampf und/oder Heißwasser Milchrückstände in der Luftleitung beseitigt, indem diese in Richtung der Milchleitung und im weiteren zur Milchschaumdüse transportiert und ausgespült werden.

Der Kaffeevollautomat umfasst eine Schalteinrichtung jedenfalls für die Dampfleitung, die als Mehrfachventil, z.B. als Keramikscheibenventil, ausgebildet ist, um wahlweise Dampf oder Heißwasser aus der Heizung zur Milchschaumdüse zu leiten. Nach einer weiteren vorteilhaften Ausgestaltung der Erfindung kann auch die Spülleitung durch die Schalteinrichtung aktiviert oder deaktiviert werden. Da an der Schalteinrichtung ohnehin der Dampf oder das Heißwasser anliegt, das als Spülfluid genutzt werden kann, kann Dampf und/oder Heißwasser durch die Spülleitung in die Milchleitung transportiert werden. Indem Dampf und/oder Heißwasser sich stromauf und stromab einer Mündung der Spülleitung in die Milchleitung, d.h. bis hin zum Milchvorratsbehälter einerseits und bis in die Milchschaumdüse andererseits, ausbreiten können, wird die Milchleitung von Milchrückständen gereinigt. Der erfindungsgemäße Kaffeevollautomat bietet damit den erheblichen Vorteil, dass die gesamte Milchleitung in einem automatischen Spülvorgang gereinigt werden kann. Ein Ausbau und ein separates, ggf. manuelles Spülen von Teilen der Milchleitung kann damit entfallen, was die Bedienung der Kaffeevollautomaten vereinfacht und insbesondere die als unangenehm empfundenen Servicetätigkeiten reduziert.

Gemäß den bisher beschriebenen Ausführungsformen schaltet das Sperrventil einen Luftzugang zur Luftleitung und verhindert zugleich ein ungewolltes Eindringen von Milch in die Luftleitung. Nach einer weiteren vorteilhaften Ausgestaltung der Erfindung kann die Schalteinrichtung auch den Luftzugang zur Luftleitung steuern. Damit kann eine Funktion des Sperrventils entfallen und auf die Schalteinrichtung übertragen werden, nämlich die aktive Ansteuerung des Sperrventils zum Öffnen für einen Luftzugang zur Milchschaumdüse beim Milchschäumen. An der Schalteinrichtung liegen auch Dampf und Heißwasser an, den bzw. das sie wahlweise in die Dampf- oder Spülleitung leiten kann. Die Spülleitung mündet noch stromauf der ersten Mündung in die Luftleitung. Da sie beide an der Schalteinrichtung anschließen und ausschließlich alternativ und nicht zeitgleich betätigt werden, können folglich die Luftleitung und die Spülleitung konstruktiv zu einer einzigen Fluidleitung zusammenfallen. Demgemäß kann die Schalteinrichtung in einer ersten Schaltstellung die Fluidleitung, die zwischen Schalteinrichtung und Milchleitung verläuft, in der Funktion der vormaligen Luftleitung mit einem Lufteingang verbinden und in einer zweiten Schaltstellung die Fluidleitung in der Funktion der vormaligen Spülleitung mit der Einrichtung zur Erzeugung von Dampf und/oder Heißwasser verbinden. Dadurch lassen sich der konstruktive Aufwand des Kaffeevollautomaten und damit seine Herstellungskosten reduzieren.

Nach einer weiteren vorteilhaften Ausgestaltung der Erfindung ist das Sperrventil als Einrichtungs-, Rückschlag-, oder Lippenventil ausgebildet. Ein "Einrichtungsventil" ermöglicht einen Fluidstrom selbsttätig, aber nur in eine Richtung und verhindert ihn in eine Gegenrichtung. Eine Ausführungsform eines solchen Einrichtungsventils stellt ein federbelastetes Kugel-Rückschlagventil dar, das durch einen Fluidstrom in einer ersten Richtung entgegen der Federkraft aufgedrückt werden kann und sich mit einem Versiegen des Fluidstroms durch die Federkraft selbsttätig schließt, wobei es einen Fluidstrom in der Gegenrichtung stets sperrt. Es können auch alternativ oder zusätzlich unterdruckbetätigbare Ventile wie Schnüffel-, Lippen-, Klappen-, oder Schnabelventile zum Einsatz kommen.

Nach einer weiteren bevorzugten Ausführungsform des Kaffeevollautomaten kann sie in der Milchleitung stromauf der ersten Mündung eine Vorrichtung zur Begrenzung der Durchflussmenge umfassen. Die Vorrichtung kann beispielsweise als Lochblende oder Drossel, nämlich als sog. Reduzierstück ohne bewegliche und damit verschmutzungsempfindliche Teile ausgebildet sein und einen Wechsel von unterschiedlichen Innendurchmessern bzw. Innenquerschnitten der Milchleitung darstellen. Sie definiert und verringert damit den Durchstrom der Milchleitung stromauf der ersten Mündung gegenüber demjenigen stromab der ersten Mündung. Sie bewirkt außerdem eine festgelegte Aufteilung des Volumenstroms eines über die Spülleitung in die Milchleitung eingeleiteten Spülfluids in Richtung des MilchVorratsbehälters einerseits und der Schaumdüse andererseits. Die Vorrichtung kann grundsätzlich an einer beliebigen Stelle in der Milchleitung stromauf der ersten Mündung angeordnet sein.

Gemäß einer weiteren vorteilhaften Ausgestaltung kann der erfindungsgemäße Kaffeevollautomat ein Drosselventil aufweisen. Gegenüber der oben genannten Vorrichtung zur Begrenzung der Durchflussmenge bietet das Drosselventil den Vorteil eines variablen Innenquerschnitts, der beispielsweise auf einen bestimmten Betriebszustand des Kaffeevollautomaten einstellbar ist. Vorzugsweise umfasst die Verstellung des Innenquerschnitts der Milchleitung mindestens zwei Positionen, die einerseits auf die Einleitung von Spülfluid in die Milchleitung, und andererseits auf die Erzeugung eines Unterdrucks in der Milchschaumdüse zur Erzeugung des gewünschten Milchschaums abgestimmt sind. Ein geeignetes Volumenverhältnis von angesaugter Milch zu Luft liegt bei etwa 1:1. Das Drosselventil kann als Schlauchquetschventil ausgebildet sein. Eine Verstellung des Innenquerschnitts kann ein Stellglied leisten, welches einen flexiblen Schlauchabschnitt der Milchleitung von außen zusammendrückt, ohne selbst mit der Milch in Berührung zu kommen. Das Schlauchquetschventil bietet deshalb den Vorteil eines geringen Wartungs- und Reinigungsaufwands, da es mit Ausnahme des Schlauchs keine beweglichen Elemente umfasst, die mit Milch in Berührung kommen. Es kann außerdem weitere Position bieten, die zum Beispiel zu einer vollständigen Sperrung der Milchleitung führen.

Nach einer weiteren vorteilhaften Ausgestaltung der Erfindung kann die Vorrichtung den Volumenstrom eines Fluids aus der Luftleitung stromab : stromauf der Vorrichtung in einem Verhältnis 3:1 teilen. Dies entspricht einem korrespondierenden Verhältnis des Querschnitts des Drosselventils und des Leitungsquerschnitts der Milchleitung stromab des Drosselventils. Das Verteilungsverhältnis von drei Vierteln des Volumens eines Spülfluids in Richtung der Milchschaumdüse und einem Viertel in Richtung des Milchvorratsbehälters bewirkt eine optimale Reinigung der Milchleitung von Milchrückständen. Ein in die Richtung des Milchvorratsbehälters gelangender Anteil des Spülfluids kann aus der Milchleitung stromauf der Vorrichtung abgesaugt werden.

Nach einer weiteren vorteilhaften Ausgestaltung kann der erfindungsgemäße Kaffeevollautomat als Vorrichtung ein Rückschlagventil an Stelle eines Drosselventils aufweisen. Das Rückschlagventil kann einen Milchfluss stromabwärts der Milchleitung zulassen und einen Fluidstrom stromaufwärts sperren, z.B. bei einer Einleitung von Spülfluid in die Milchleitung im Rahmen eines selbständigen Reinigungsvorgangs. Ein Rückschlagventil erweist sich dabei als vorteilhaft, indem es ein Eindringen von Spülfluid in den Milchvorratsbehälter verhindert und dadurch den Vorgang einer Abführung von Spülfluid aus dem Milchvorratsbehälter obsolet macht. Um einen hygienischen Betrieb des Kaffeevollautomaten zu gewährleisten, kann die Milchleitung stromauf der ersten Mündung eine Belüftungsmöglichkeit aufweisen, so dass nach einem Milchbezug Milchrückstände stromaufwärts des Rückschlagventils möglichst vollständig in den Milchvorratsbehälter zurückfließen. Dies kann durch eine besondere Beschichtung der Milchleitung unterstützt werden.

Gemäß einer weiteren vorteilhaften Ausgestaltung kann der Kaffeevollautomat ein ansteuerbares Durchflussbegrenzungsmittel stromab der ersten Mündung aufweisen, wie es ausführlich in der parallelen Anmeldung mit der Nr. 201201751 des Anmelders beschrieben ist. Vorzugsweise ist es als Schlauchquetschventil ausgebildet, dessen Vorteile für einen Reinigungsvorgang bereits weiter oben erläutert wurden. Zu Reinigungszwecken wird es vollständig geöffnet, um das gewünschte Verhältnis des Volumenstroms des Fluids aus der Luftleitung stromab : stromauf der Vorrichtung von 3:1 aufrecht zu erhalten.

Milchrückstände sammeln sich bei einer Durchleitung von Milch durch die Milchleitung bekanntermaßen vor allem an Stellen, die Verwirbelungen des Milchstroms ausgesetzt sind. Als anfällig für Ablagerungen zeigen sich in erster Linie bewegliche Elemente wie etwa Ventilklappen, sowie Rillen und Vertiefungen an Leitungsanschlüssen. Während ein selbständiger Spülvorgang flächige Partien eines Leitungssystems zuverlässig spült, kann es insbesondere an den genannten Stellen zu hartnäckigen Ablagerungen kommen. Nach einer weiteren bevorzugten Ausführungsform kann die erste Mündung sowie ein anschließender Abschnitt der Luftleitung und ein beidseitig anschließender Abschnitt der Milchleitung an der ersten Mündung als T-Stück ausgebildet sein, das zumindest die Vorrichtung zur Begrenzung der Durchflussmenge in der Milchleitung und vorteilhafterweise das Sperrventil und/oder das Durchflussbegrenzungsmittel stromab der ersten Mündung umfasst. Damit sind verschmutzungsanfällige und daher reinigungssensible Bestandteile der Milchleitung in einem Bauteil zusammengefasst, das im Schadensfall oder im Rahmen von Servicetätigkeiten mit geringem Aufwand ausgetauscht werden kann. Vorzugsweise ist das T-Stück ansteckbar und zumindest teilweise zerlegbar ausgebildet, sodass es der Benutzer des Kaffeevollautomaten zu Reinigungszwecken bequem aus dem Leitungssystem entnehmen und reinigen kann.

Das Prinzip der Erfindung wird im Folgenden anhand zweier Zeichnungen beispielshalber noch näher erläutert. In der Zeichnung zeigen:
- Figur 1:: einen vergleichbaren Ausschnitt eines Schaltbilds eines Kaffeevollautomaten gemäß einer ersten Ausführungsform,
- Figur 2:: einen vergleichbaren Ausschnitt eines Schaltbilds gemäß einer zweiten Ausführungsform.

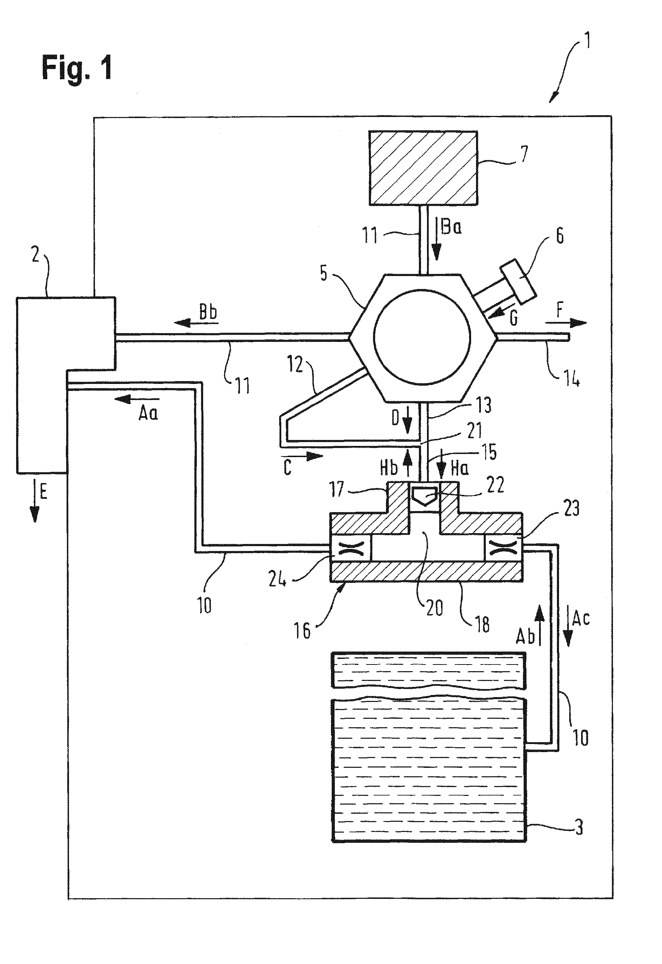

In der Figur 1 ist ein Kaffeevollautomat 1 mit einer Milchschaumdüse 2, einem Milchvorratsbehälter 3, einem Mehrfachventil 5 als einer Schalteinrichtung, einem Lufteingang 6 sowie einer Heizung 7 als einer Einrichtung zur Erzeugung von Dampf und/oder Heißwasser gezeigt. Eine Milchleitung 10 verbindet den Milchvorratsbehälter 3 mit der Milchschaumdüse 2, wobei eine hauptsächliche Flussrichtung der Milch Ab, Aa in beiden Abschnitten der Milchleitung 10 in Richtung der Milchschaumdüse 2 erfolgt. Eine Luftleitung 12 verbindet das Mehrfachventil 5 an einer ersten Mündung 20 mit der Milchleitung 10, eine Spülleitung 13 verbindet das Mehrfachventil 5 an einer zweiten Mündung 21 mit der Luftleitung 12. In einem Leitungsabschnitt 15, der zwischen der ersten Mündung 20 und der zweiten Mündung 21 verläuft, fallen die Luftleitung 12 und die Spülleitung 13 in einer gemeinsamen Fluidleitung zusammen. Eine Dampfleitung 11 verbindet die Heizung 7 mit dem Mehrfachventil 5 und jenes mit der Milchschaumdüse 2. Außerdem sind eine Drainageleitung 14 sowie der Lufteingang 6 an das Mehrfachventil 5 angeschlossen. Damit stellt das Mehrfachventil 5 ein Verbindungselement der verschiedenen daran angeschlossenen Fluidleitungen 11, 12, 13 dar. Es kann einzelne, aber auch mehrere Leitungsverbindungen gleichzeitig öffnen und/oder schließen. Lediglich die Milchleitung 10 schließt nicht direkt an das Mehrfachventil 5 an.

Ein Segment 17 des Leitungsabschnitts 15 und ein Segment 18 der Milchleitung 10 an der ersten Mündung 20 sind als einstückiges T-Stück 16 ausgebildet. Das T-Stück 16 ist an zwei Enden in die Milchleitung 10 eingesteckt und an einem dritten Ende an den Leitungsabschnitt 15 angesteckt.

Im Segment 18 ist in einem Bereich, der in eine Richtung stromaufwärts zum Milchvorratsbehälter 3 weist, eine Drossel 23 angebracht. Sie reduziert den Durchfluss der Milchleitung 10 stromauf der ersten Mündung 20 auf ein Drittel des Durchflusses der Milchleitung 10 stromab der ersten Mündung 20. Die Durchflüsse der Milchleitung 10 stromauf zu stromab der ersten Mündung verhalten sich damit wie 1: 3.

Im Segment 17 ist ein Schnabelventil 22 angebracht. Es stellt ein Einrichtungsventil dar, das einen unterdruckgetriebenen Luftstrom in Richtung der Milchschaumdüse 2 passieren lässt, wohingegen es insbesondere einen Milchfluss in der Gegenrichtung blockiert.

Die Milchleitung 10 enthält in einem Abschnitt stromabwärts der ersten Mündung 20 ein Drosselventil 24. Auch das Drosselventil 24 kann im Segment 18, und zwar stromab der ersten Mündung 20 angeordnet sein, so dass das demontierbare T-Stück 16 sehr kompakt ausfallen kann.

Im Betrieb des Kaffeevollautomaten 1 schaltet das Mehrfachventil 5 zur Erzeugung von Milchschaum in Flussrichtung E mittels der Milchschaumdüse 2 einen Dampfstrom von der Heizung 7 in Flussrichtung Ba, Bb zur Milchschaumdüse 2 frei. Gleichzeitig stellt es eine Verbindung zwischen dem Lufteingang 6 und der Luftleitung 12 her. Alle anderen Verbindungen sind zu diesem Zeitpunkt geschlossen. Die Milchleitung 10 und die Dampfleitung 11 fließen in der Milchschaumdüse 2 zusammen, die eine Venturi-Geometrie aufweist. So erzeugt der Dampfstrom in Flussrichtung Ba, Bb einen Unterdruck in der Milchleitung 10. Der Unterdruck führt zum Ansaugen sowohl von Milch im Milchvorratsbehälter 3 in Flussrichtung Ab, Aa als auch von Luft am Lufteingang 6 in Flussrichtung G, C, Ha, Aa. Die Luft passiert das Schnabelventil 22, das sich bei Unterdruck öffnet. Milch und Luft vermischen sich in einem Abschnitt der Milchleitung 10 stromabwärts der ersten Mündung 22 und werden in der Milchschaumdüse 2 aufgeschäumt und durch Dampf erhitzt, wodurch Milchschaum entsteht. Der Volumenanteil angesaugter Luft und der Volumenanteil angesaugter Milch stehen dabei in einem günstigen Verhältnis von circa 1:1, das einen feinblasigen Milchschaum begünstigt. Zur Erzeugung von heißer Milch in Flussrichtung E mittels der Milchschaumdüse 2 gibt das Mehrfachventil 5 einen Strom von Dampf aus der Heizung 7 in Flussrichtung Ba, Bb zur Milchschaumdüse 2 frei. Alle anderen Verbindungen schließt es. Der Dampfstrom ruft in der Milchschaumdüse 2 einen Unterdruck hervor, der Milch aus dem Milchvorratsbehälter 3 in Flussrichtung Aa, Ab in die Milchschaumdüse 2 saugt. Die Erhitzung der Milch durch Dampf in der Milchschaumdüse 2 resultiert in heißer Milch.

Bei einem automatischen Spülvorgang schaltet das Mehrfachventil 5 einen Strom von Dampf und/oder Heißwasser als Spülfluid von der Heizung 7 in Flussrichtung Ba, Bb zur Milchschaumdüse 2 frei. Gleichzeitig wird das Mehrfachventil 5 in eine Schaltstellung gebracht, die einen Fluss von Dampf und/oder Heißwasser von der Heizung 7 in Flussrichtung Ba, D, Ha, Aa, Ac öffnet. Das Spülfluid verzweigt sich dabei stromab der ersten Mündung 20, so dass es einerseits in Richtung der Milchschaumdüse 2 und andererseits in Richtung des Milchvorratsbehälters 3 strömt. Die Drossel 23 teilt den Strom des Spülfluids auf, so dass der Volumenanteil stromabwärts der Drossel 23 in der Milchleitung 10 und der Volumenanteil stromaufwärts der Drossel 23 in einem Verhältnis von circa 3:1 stehen. Dieses Verhältnis erzielt eine optimale Entfernung von Milchrückständen nach Gebrauch der Milchleitung 10 bei einer gleichzeitig möglichst geringen Menge von Spülfluid.

Nach einer Beaufschlagung der Fluidleitungen 11, 13 mit Dampf oder Heißwasser wird überflüssiges Fluid bei einer entsprechenden Schaltstellung des Mehrfachventils 5 durch die Drainageleitung 14 in Flussrichtung F abgeführt.

Bei geringfügigen Undichtigkeiten und Druckschwankungen kann Milch aus der Milchleitung 10 durch das Schnabelventil 22 in Flussrichtung Hb in den Leitungsabschnitt 15 eindringen. Da abhängig von der jeweiligen Schaltstellung des Mehrfachventils 5 der Leitungsabschnitt 15 alternativ Spülfluid oder Luft in der Flussrichtung D transportiert, wird Milch, die in Flussrichtung Hb durch ein ggf. schadhaftes Schnabelventil 22 in den Leitungsabschnitt 15 eindringt, bei einem Spülvorgang mit Dampf und/oder Heißwasser ausgespült.

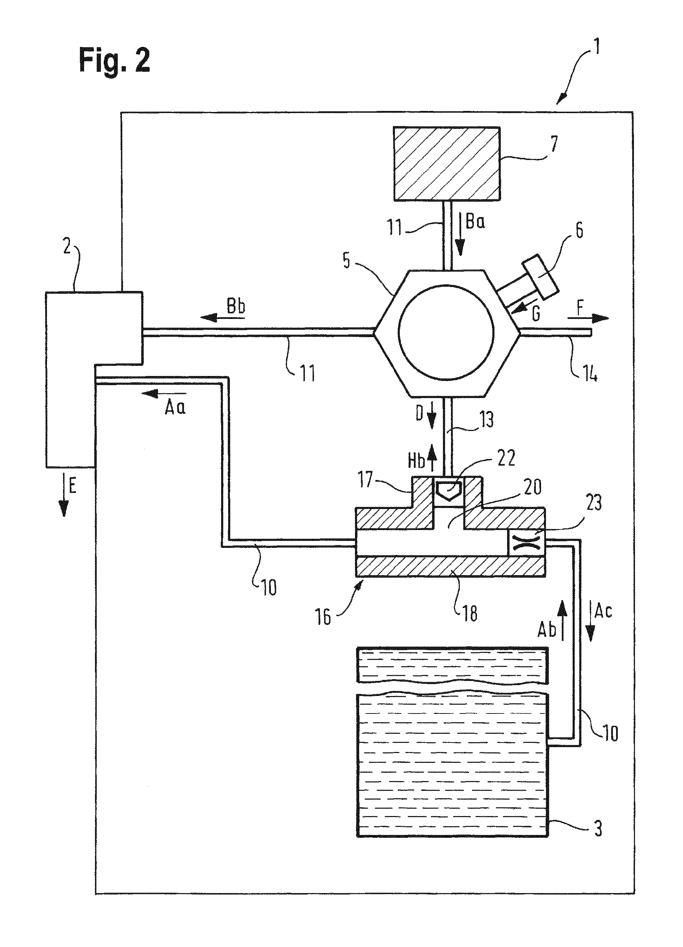

In Figur 2 entfällt das in Figur 1 gezeigte Drosselventil 24 in der Milchleitung 10, das aber in keinem Zusammenhang mit der Luftleitung 12 und Spülleitung 13 (Figur 1) steht, also auch in einer Vorrichtung gemäß Figur 2 angeordnet sein könnte. Die Figur 2 weicht von der Figur 1 noch insofern ab, als sie anstelle der stromauf einer zweiten Mündung 21 getrennt verlaufenden Luftleitung 12 und Spülleitung 13 (Figur 1) lediglich eine Fluidleitung 19 (Figur 2) aufweist. Abhängig von der jeweiligen Schaltstellung des Mehrfachventils 5 besorgt die Fluidleitung 19 alternativ den Transport von Spülfluid oder Luft in der Flussrichtung D. Damit kann eine separate Leitung entfallen, was den Herstellungsaufwand des Kaffeevollautomaten reduziert und eine gewisse Platzersparnis mit sich bringt. Milch, die in Flussrichtung Hb durch ein ggf. schadhaftes Schnabelventil 22 in die Fluidleitung 19 eindringt, wird bei einem Spülvorgang mit Dampf und/oder Heißwasser, wie in Figur 1 beschrieben, aus der Fluidleitung 19 in Flussrichtung D ausgespült.

Da es sich bei den vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Fluidleitungsverläufe in anderer Form als in der hier beschriebenen erfolgen. Ebenso kann das T-Stück in einer anderen Form, z.B. in einer Y-Form, ausgestaltet sein, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Kaffeevollautomat
- 2: Milchschaumdüse
- 3: Milchvorratsbehälter
- 4: Stelleinrichtung
- 5: Mehrfachventil
- 6: Lufteingang
- 7: Heizung
- 10: Milchleitung
- 11: Dampfleitung
- 12: Luftleitung
- 13: Spülleitung
- 14: Drainageleitung
- 15: Leitungsabschnitt
- 16: T-Stück
- 17: Segment des Leitungsabschnitts 15
- 18: Segment der Milchleitung 10
- 19: Fluidleitung
- 20: Erste Mündung
- 21: Zweite Mündung
- 22: Schnabelventil
- 23: Drossel
- 24: Drosselventil

- Aa: Flussrichtung Milchleitungsabschnitt
- Ab: Flussrichtung Milchleitungsabschnitt
- Ac: Flussrichtung Milchleitungsabschnitt
- Ba: Flussrichtung Dampfleitungsabschnitt
- Bb: Flussrichtung Dampfleitungsabschnitt
- C: Flussrichtung Luftleitung
- D: Flussrichtung Spülleitung
- E: Flussrichtung Milchschaum/Heißmilch
- F: Flussrichtung Drainageleitung
- G: Flussrichtung Lufteingang
- Ha: Flussrichtung Leitungsabschnitt
- Hb: Flussrichtung Leitungsabschnitt

## Patentansprüche

1. Kaffeevollautomat (1) mit
- einer Milchschaumdüse (2) zur Erzeugung von erhitzter Milch und/oder Milchschaum,
- einer Milchleitung (10) zur Zufuhr von Milch aus einem Milchvorratsbehälter (3) zur Milchschaumdüse (2),
- einer Dampfleitung (11), die eine Einrichtung (7) zur Erzeugung von Dampf und/oder Heißwasser und die Milchschaumdüse (2) verbindet,
- einer Luftleitung (12) zur Zufuhr von Luft zur Milchschaumdüse (2), und
- einer Spülleitung (13), die stromauf der Milchschaumdüse (2) in die Milchleitung (10)
mündet,
**dadurch gekennzeichnet, dass**
die Luftleitung (12) an einer ersten Mündung (20) in die Milchleitung (10) mündet.

2. Kaffeevollautomat nach Anspruch 1, mit einem Sperrventil (22) in der Luftleitung (12), **dadurch gekennzeichnet, dass** die Spülleitung (13) an einer zweiten Mündung (21) stromauf des Sperrventils (22) in die Luftleitung (12) mündet.

3. Kaffeevollautomat nach einem der vorhergehenden Ansprüche, **gekennzeichnet durch** eine gemeinsame Schalteinrichtung (5) für die Dampfleitung (11) und die Luftleitung (12).

4. Kaffeevollautomat nach Anspruch 3, **dadurch gekennzeichnet, dass** das Sperrventil (22) als Einrichtungs-, Rückschlag-, oder Schnabelventil ausgebildet ist.

5. Kaffeevollautomat nach einem der vorhergehenden Ansprüche, **gekennzeichnet durch** eine Vorrichtung (23) zur Begrenzung der Durchflussmenge in der Milchleitung (10) stromauf der ersten Mündung (20).

6. Kaffeevollautomat nach Anspruch 5, **gekennzeichnet durch** ein Drosselventil als Vorrichtung (23).

7. Kaffeevollautomat nach Anspruch 4 oder 5, **dadurch gekennzeichnet, dass** die Vorrichtung (23) den Volumenstrom eines Fluids aus der Luftleitung (12) stromab : stromauf der Vorrichtung (23) vorzugsweise in einem Verhältnis 3:1 teilt.

8. Kaffeevollautomat nach Anspruch 4, **gekennzeichnet durch** ein Rückschlagventil als Vorrichtung (23).

9. Kaffeevollautomat nach einem der vorhergehenden Ansprüche, **gekennzeichnet durch** ein Durchflussbegrenzungsmittel (24) stromab der ersten Mündung (20).

10. Kaffeevollautomat nach einem der vorhergehenden Ansprüche, **dadurch gekennzeichnet, dass** ein Abschnitt der Luftleitung (12) und ein Abschnitt der Milchleitung (10) an der ersten Mündung (20) als einstückiges T-Stück (16) ausgebildet sind, das zumindest die Vorrichtung (23) umfasst.
